# EUROPÄISCHE PATENTANMELDUNG

(11) **EP 1 557 591 A2**
(43) Veröffentlichungstag der Anmeldung: **27.07.2005**
(21) Anmeldenummer: 04028801.1
(22) Anmeldetag: 04.12.2004
(51) Int. Cl.: F16H 61/00, F16H 61/12

(54) **Hydraulisch gesteuertes Kegelscheibenumschlingungsgetriebe**

(30) Priorität: 23.01.2004 DE 102004003391
(71) Anmelder: PIV Drives GmbH, 61352 Bad Homburg (DE)
(72) Erfinder: Matzig, Rainer, 61476 Kronberg (DE)
(74) Vertreter: Petersen, Frank, Dipl.-Ing.

(57) **Zusammenfassung**

Die Erfindung betrifft ein Kegelscheibenumschlingungsgetriebe mit auf An- und Abtriebswellen angeordneten Paaren von Kegelscheiben, zwischen denen ein Zugmittelstrang zur Leistungsübertragung umläuft. Zur Einstellung und Aufrechterhaltung der Getriebeübersetzung wird Zylinder-Kolben-Aggregaten, die axial beweglichen Kegelscheiben zugeordnet sind, Druckmittel über ein Steuerventil zugeteilt. Das Steuerventil wird durch ein Proportionaldruckminderventil vorgesteuert, das von einer elektrischen Steuer- und Recheneinheit beeinflusst wird. Um zu verhindern, dass bei einem Stromausfall an der Steuer- und Recheneinheit das Getriebe ungewollt in eine Extremstellung verfährt, wird vorgeschlagen, in die Leitung, über die das Steuerventil betätigt wird, ein 2/2-Wegeventil zu integrieren, das bei Stromausfall federbetätigt geschlossen wird und somit den Regeldruck am Steuerventil aufrechterhält.

## Beschreibung

Die Erfindung betrifft ein Kegelscheibenumschlingungsgetriebe mit auf An- und Abtriebswellen angeordneten Paaren von Kegelscheiben, von denen je eine fest mit der Welle verbunden ist sowie je eine auf der Welle axial verschiebbar ist und zwischen denen ein Zugmittelstrang zur Leistungsübertragung umläuft. Die axial verschiebbaren Kegelscheiben bilden zusammen mit wellenfesten Kolben Zylinder-Kolben-Aggregate. Den Zylinder-Kolben-Aggregaten, wird von einer Pumpe über ein Steuerventil Druckmittel zur Einstellung und Aufrechterhaltung der Getriebeübersetzung zugeteilt. Der das Steuerventil betätigende Regeldruck wird bedarfsgerecht durch eine Proportionaldruckminderventil (PV) bestimmt, das von einer Steuer- und Recheneinheit beeinflusst wird, die ihrerseits die erforderlichen Getriebekenndaten über Sensoren erhält und in entsprechende elektrische Signale umsetzt. Der Regeldruck greift dabei in einem Druckraum an den gegen ein Federelement abgestützten Steuerkolben des Ventils an.

Getriebe dieser Gattung mit hydraulischer Anpressung der Kegelscheiben sind in ihrer grundsätzlichen Funktionsweise bereits zum Beispiel durch die DE-A-12 64 196 bekannt. Dort erfolgt die Übersetzungseinstellung über mechanische Beeinflussung der Steuerkolbenstellung. Eine Weiterbildung derartiger Getriebe mit hydraulischer Anpressung der Kegelscheiben sowie mit hydraulisch gesteuerter Übersetzungseinstellung ist dann beispielsweise aus der DE-A-39 14 792 bekannt.

Bei Getrieben der letztgenannten Art kann es zu einem Ausfall des Regeldruckes kommen, der für die Beeinflussung der Stellung des Steuerkolbens notwendig ist, mit dem die Übersetzungseinstellung des Getriebes geregelt wird. Diese Regelung erfolgt dabei nämlich über eine elektronische Rechen- und Steuereinheit, die das PV entsprechend beeinflusst. Diese Regelung kann bei einem Stromausfall nicht aufrechterhalten werden, so dass der Steuerkolben sich ungesteuert verschiebt und der Regeldruck wegfällt.

Bei einem solchen Druckausfall wird der Steuerkolben von der ihm zugeordneten Feder in eine Endstellung verschoben, was einem Kommando zu einer plötzlichen Änderung der eingestellten Übersetzung in eine Extremstellung entspricht. Je nach hydraulischer Schaltung der Druckleistungen vom Steuerventil zum An- bzw. Abtriebscheibensatz entsprechend den jeweiligen Erfordernissen im gewünschten Anwendungsfall, kann dies eine Übersetzungsänderung ins Schnelle oder ins Langsame verursachen.

Eine derartige ungewollte Übersetzungsänderung kann erhebliche Probleme verursachen. Ist z. B. der Abtrieb mit einer größeren trägen Masse verbunden, so würde ein Verstellkommando ins Langsame für die Antriebsseite eine möglicherweise starke Beschleunigung der Antriebsmaschine bedeuten. Auf einen Kraftfahrzeugantrieb übertragen heißt das z. B., dass das als träge Masse geltende gesamte Fahrzeug bei einer plötzlichen Übersetzungsänderung ins Langsame (vergleichbar bei einem Stufenschaltgetriebe mit einem plötzlichen Schalten während der schnellen Fahrt in den ersten Gang) den Motor zu hohen oder überhöhten Drehzahlen antreibt. Dies kann nicht nur zu Schäden am Motor sondern auch am gesamten Antriebsstrang führen.

Nur am Rande sei erwähnt, dass ein solcher Fall bei einem Kraftfahrzeug auch verkehrstechnische Folgen haben könnte, da das Fahrzeug durch das überraschende Abbremsen außer Kontrolle geraten könnte. Auch könnte es zu Fehlreaktionen bei einem Fahrzeugführer kommen mit entsprechenden Folgen.

Eine Verstellung ins Schnelle hingegen kann zu einer Überbelastung an Teilen des Antriebstranges führen, wenn die Antriebsmaschinen z. B. eine im Netz hängende Synchronmaschine ist.

Es sind auch Anwendungsfälle denkbar, die auf der An- und auf der Abtriebsseite große träge Massen aufweisen.

Aufgabe der Erfindung ist es, insbesondere bei Stromausfall ein solches plötzliches Verstellkommando in eine Extremübersetzung zu verhindern und die eingestellte Übersetzung möglichst beizubehalten bzw. sie in einer gewünschten Weise in eine Richtung so zu verändern, dass keine Überbelastung von Bauteilen oder andere der oben geschilderten Nachteile bzw. Gefahrenzustände eintreten können.

Diese Aufgabe wird erfindungsgemäß dadurch gelöst, dass in der Leitung, die zu dem Druckraum des Steuerkolbens führt, ein bei Stromausfall aktiviertes Schließelement vorgesehen ist. Damit wird erreicht, dass bei einem Stromausfall in dem Druckraum des PV der bei dem Stromausfall vorhandene Vorsteuerdruck P_{A} aufrechterhalten bleibt. Ein ungewolltes Schnellverstellen ins Schnelle oder ins Langsame wird somit verhindert und nach Beheben des zu dem Stromausfall führenden Fehlers kann dann gezielt wieder bei der minimalen Übersetzung angefahren werden.

Bei einer besonders bevorzugten Ausführungsform ist der Druckraum des Steuerkolbens mit einer Membran gegenüber dem Steuerkolben abgeschlossen und der zwischen Steuerkolben und Membran befindliche Raum ist mit einer Entlastungsbohrung versehen.

Dadurch kann kein Öl, durch den Spalt zwischen Steuerkolben und Gehäuse in den Druckraum des Steuerkolbens gelangen und hier in unbeabsichtigter Weise zu einem Druckaufbau führen, was den auf den Steuerkolben wirkenden Vorsteuerdruck P_{A} in ungewünschter Weise erhöht. Derartiges Öl wird statt dessen durch die Entlastungsbohrung zum Tank zurückgeführt.

Vorzugsweise wird als Schließelement, das in der zum Druckraum des Steuerkolbens führenden Leitung integriert ist, ein 2/2-Wegeventil verwandt, das bei Stromausfall selbsttätig über eine Feder betätigt wird. Hiermit kann eine sehr betriebssichere Lösung gewählt werden. Da somit auch Standardbauteile verwandt werden können, ist diese Lösung auch recht preiswert und wirtschaftlich zu realisieren.

Nachfolgend ist ein Ausführungsbeispiel der Erfindung unter Bezugnahme auf die Zeichnung näher beschrieben.

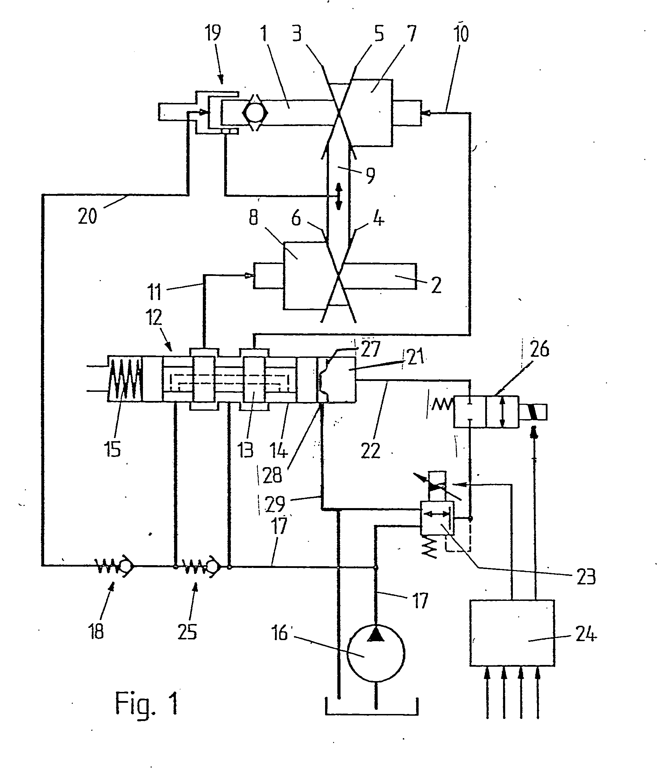

- Figur 1: zeigt in vereinfachter Form den Hydraulikplan eines rein hydraulisch angepressten Getriebes mit elektrohydraulischer Steuerung gemäß der Erfindung.

Figur 1 zeigt ein stufenloses Getriebe mit auf zwei parallelen Wellen 1 und 2 angeordneten Scheibensätzen. Diese bestehen jeweils aus einer mit der Welle fest verbundenen Kegelscheibe 3 bzw. 4 und einer mit der Welle drehfest verbunden aber axial verschiebbaren Kegelscheibe 5 und 6. Die verschiebbaren Kegelscheiben 5 und 6 sind über jeweils zugehörige Druckzylinder 7 oder 8 zu betätigen.

Beide Kegelscheibenpaare sind durch ein zwischen ihnen umlaufendes Zugmittel 9 kraftschlüssig miteinander verbunden.

Über Leitungen 10 und 11 wird den Druckzylindern 7 und 8 Druckmittel von einem Steuerventil 12 zugeführt. Dieses Steuerventil ist als so genannter Vierkantensteuerschieber ausgeführt, wobei ein Steuerkolben 13 in einem entsprechenden Gehäuse 14 axial beweglich ist und sich gegen ein Federelement 15 abstützt.

Dieses Steuerventil 12 wird von einer Pumpe 16 über eine Leitung 17 mit Druckmittel versorgt. Zur Aufrechterhaltung eines gewünschten Grunddruckes ist optional ein Vorspannventil 18 vorhanden, das mit einem nachgeschalteten Drehmomentfühler 19 über eine Leitung 20 den Hydraulikabfluss bildet.

Dem Steuerventil 12 wird zu einer Verstellung über eine Leitung 22 in einen Druckraum 21 bedarfsgerecht Druckmittel mit dem Vorsteuerdruck P_{A} durch das Proportionaldruckminderventil (PV) 23 zugeführt. Damit wird der Steuerkolben 13 in dem Gehäuse 14 axial gegen das Federelement 15 verschoben und so eine Aufrechterhaltung oder Änderung der Getriebeübersetzung gesteuert.

Das Proportionaldruckminderventil 23 erhält das Druckmittel seinerseits von der Pumpe 16 und wird von einer elektrischen bzw. elektronischen Steuer- und Recheneinheit 24 gesteuert. Diese erhält ihre erforderlichen Informationen über nicht dargestellte Sensoren aufgrund derer sie das PV 23 steuert.

Bei einem Stromausfall kann die elektrische bzw. elektronische Steuer- und Recheneinheit 24 nicht mehr arbeiten und damit fällt auch das PV 23 aufgrund der fehlenden Steuerung durch die Steuer- und Recheneinheit 24 aus, wodurch der Druck P_{A} im Druckraum 21 nicht mehr geregelt wird. Dies kann dazu führen, dass das Getriebe unkontrolliert ins Schnelle oder ins Langsame verstellt.

Um dies zu verhindern ist ein 2/2-Wegeventil 26 vorgesehen, das die zum Druckraum 21 führende Leitung 22 offenhält, solange Strom vorhanden ist. Bei Ausfall der Stromversorgung an der Steuer- und Recheneinheit 24 wird das 2/2-Wegeventil federbetätigt geschlossen und damit im Druckraum 21 der zu diesem Zeitpunkt auf den Vierkantensteuerschieber 12 wirkende Vorsteuerdruck aufrechterhalten.

Zur Aufrechterhaltung des Vorsteuerdrucks während eines Stromausfalles ist der Druckraum 21 mit einer Membran 27 abgeschlossen. Ein eventueller Druckaufbau, der in dem Druckraum 21 durch zwischen dem Steuerkolben 13 und dem Gehäuse 14 durchkriechendes Öl entstehen könnte und so den in der Leitung 22 bzw. im Drehraum 21 aufrechterhaltenen Vorsteuerdruck P_{A} überlagern könnte, wird durch eine Entlastungsbohrung 28 verhindert. Die Entlastungsbohrung 28 wird dabei über eine Leitung 29 drucklos mit dem Tank der Vorrichtung verbunden.

Die Übersetzung des Getriebes ändert sich somit bei dem oben beschriebenen Stromausfall nicht und man hat die Möglichkeit, das Getriebe in der vorhandenen Übersetzung weiterlaufen zu lassen und dabei den zu dem Stromausfall führenden Fehler zu beseitigen. Nachdem die Stromversorgung wieder vorhanden ist, besteht die Möglichkeit, die Regelung wieder aufzunehmen oder aber, wenn das Getriebe zwischenzeitlich zum Stillstand gekommen ist, es über eine (nicht dargestellte) Stillstandsverstellung in eine Anfahrposition zu verbringen und aus dieser heraus die Anlage wieder anzufahren.

Durch Verwendung des 2/2-Wegeventils sowie der Membran im Druckraum des Steuerkolbens ist eine einfache und betriebssichere Lösung gefunden, mit der bei Stromausfall ein plötzliches ungewolltes Verstellen des Getriebes in eine Extremstellung zu verhindern ist und auch über einen längeren Zeitraum mit Stromausfall mit einer derartigen Verstellung nicht zu rechnen ist.

## Patentansprüche

1. Stufenlos einstellbares Kegelscheibengetriebe mit auf An- (1) und Abtriebswelle (2) drehfest angeordneten Paaren von Kegelscheiben, von denen je eine (3, 4) fest mit der Welle (1, 2) verbunden sowie je eine (5, 6) axial verschiebbar ist und zwischen denen ein Zugmittelstrang (9) zur Leistungsübertragung umläuft, wobei die axial verschiebbaren Kegelscheiben (5, 6) zusammen mit jeweils wellenfesten Kolben je ein Zylinder-Kolben-Aggregat bilden, denen zur Einstellung und Aufrechterhaltung der Getriebeübersetzung von einer Pumpe (16) Druckmittel über ein Steuerventil zugeteilt wird, das als Vierkantensteuerschieber ausgebildet ist, wobei der Steuerkolben (13) in einem Druckraum (21) mit Druckflüssigkeit beaufschlagt und gegen ein Federelement (15) abgestützt ist, die über eine Leitung (22) von einem Proportionaldruckminderventil (23) geliefert wird, das von einer Steuer- und Recheneinheit (24) beeinflusst wird,
**dadurch gekennzeichnet,**
**dass** in der Leitung (22) ein bei Stromausfall aktiviertes Schließelement (26) vorgesehen ist.

2. Stufenlos einstellbares Kegelscheibengetriebe nach Anspruch 1,
**dadurch gekennzeichnet,**
**dass** das Schließelement ein 2/2-Wegeventil (26) ist.

3. Stufenlos einstellbares Kegelscheibengetriebe nach Anspruch 2,
**dadurch gekennzeichnet,**
**dass** das 2/2-Wegeventil bei Stromausfall über eine Feder betätigt ist.

4. Stufenlos einstellbares Kegelscheibengetriebe nach Anspruch 1,
**dadurch gekennzeichnet,**
**dass** der Druckraum (21) mittels einer Membran (27) gegenüber dem Steuerkolben (13) abgeschlossen ist und dass der zwischen Membran (27) und Steuerkolben (13) liegende Bereich eine Druckentlastungsbohrung (28) aufweist.
